# EUROPEAN PATENT APPLICATION

(11) **EP 4 227 559 A1**
(43) Date of publication of application: **16.08.2023**
(21) Application number: 22186497.8
(22) Date of filing: 22.07.2022
(51) Int. Cl.: F16J 15/16, F16J 15/3212, F16J 15/3236, F16K 41/04, F25B 41/31

(54) **SEALING SYSTEM WITH ANNULAR SEAL MEMBER AND EXPANDING RING FOR BI-DIRECTIONAL SEALING, FLUID VALVE WITH SEALING SYSTEM, AND SEALING METHOD**

(71) Applicant: Danfoss A/S, 6430 Nordborg (DK)
(72) Inventor: RASMUSSEN, Jens Erik, Gråsten (DK); PAWLIK, Jens, Broager (DK)
(74) Representative: Stevens, Brian

(57) **Abstract**

The present invention relates to a sealing system (1; 100) for an annular seal mount (40). It comprises an annular seal member (10) with two sealing lip portions (12, 14) connected by a connecting portion (11) and a spring-elastic spreader (17) secured within an annular groove of the seal member (10) and forms a channel (18) opening towards a first side in an axial direction (L). For providing bi-directional sealing in an inexpensive but reliable manner within small installation space, the sealing system (1; 100) has an expanding ring (20; 120) for abutting on the seal mount (40) at the first side. An engagement portion (23, 24; 122) of the expanding ring (20; 120) protrudes in the axial direction (L) towards a second side and is received within the channel (18). When the seal member (10) is pressed along the axial direction (L) against the expanding ring (23, 24; 122), the latter directly abuts the spreader (17) at a first radial position (R1; R1') and a second radial position (R2; R2'), thereby inducing spreading force for forcing the end sections of the sealing lip portions (12, 14) apart from each other via the spreader (17). The present invention further relates to a fluid valve (50) with a sealing system (1; 100) and to a sealing method.

## Description

The present invention relates to a sealing system (e.g. for sealing against a valve spindle) for an annular seal mount extending along a circumferential direction about a central axis and defining an axial direction. It further relates to a fluid valve with a sealing system and to a sealing method.

In many fluid valve types, a sealing system for sealing against a valve spindle must be provided. Typically, a fluid pressure P1 at first side of a seal mount in an axial direction is higher than a fluid pressure P2 at an opposite of the seal mount in normal operation. For example, a fluid inlet and a fluid outlet of the fluid valve are arranged at the first side and a drive section is located at the second side. However, under certain circumstances, it may occur that the fluid pressure P2 becomes higher than the fluid pressure P1 (P2 > P1, a reverse pressure drop). Therefore, the sealing system should exhibit a bi-directional sealing action. A typical cup seal has a designed seal direction. A sealing force increases when a pressure drop along the designed seal direction increases. Such a pressure drop may be also referred to as "forward pressure drop". A pressure drop in the opposite example may be referred to as "reverse pressure drop". For this, the sealing system usually comprises two cup seals, which are arranged in opposite orientations one behind the other along the axial direction. Further, a partition wall between the two cup seals is needed for abutment of the cup seals. Such a conventional bi-directional sealing system is more expensive, needs more installation space, is more difficult to mount, and exhibits more friction than a single cup seal.

EP 1 819 956 B1 discloses a metal valve stem and sealing system comprising a U-shaped metal steam gasket, a wedge ring, and an energizing spring. The wedge ring is solid and is also made of metal. The energizing spring applies an axial force to the wedge ring to cause the wedge ring to apply a contact pressure to first and second lip members of the U-shape metal steam gasket. EP 1 819 956 B1 is silent about any bi-directional sealing functionality. It is not even considered that a pressure on a side of the U-shaped metal steam gasket facing away from the wedge ring could be higher than a pressure at a side with the energizing spring. Apart from that, the wedge ring itself cannot exhibit any substantial spring-elastic flexibility in a radial direction because it is made of metal and solid. The wedge ring has a comparatively high weight. The whole solid wedge ring must be displaced in an axial direction in order to allow the lip members to bent inwardly in the radial direction. A responsiveness of the sealing system to fast pressure changes and fast movements is not ideal. The sealing system is expected to be sensitive to temperature changes and to exhibit a high degree of hysteresis. High friction may occur at least under certain circumstances. Furthermore, due to the solid wedge ring and the size and position of the energizing spring, a large installation space is needed.

Another seal is known from GB 1,100,508 A. It comprises a sealing member made of metal and an expanding member made of metal. The sealing member is annular and has a generally V-shaped transverse section providing an apex and a pair of diverging walls. A split in the expanding member permits adjustment of a diameter of the latter. GB 1,100,508 A is silent about any bi-directional sealing functionality. The diameter and hence a length of the expanding member in an axial direction might change if a pressure at a side of the sealing member with the expanding member becomes less than a pressure on a side of the sealing member facing away from the expanding member (in the case of a reverse pressure drop). Radii of contact lines between the sealing member and the expanding member might considerably change due to the decreasing diameter of the expanding member when the reverse pressure drop increases. It is not ensured that the sealing member is precisely supported by the expanding member in a correct position in the case of reverse pressure drops. Unacceptably high leak rates may occur then. Furthermore, it is difficult precisely control the friction.

US 6,007,070 A discloses pressure actuated packing assemblies. In some embodiments, a jacket member includes an inner peripheral side portion, an outer peripheral side portion, and an internal U-shaped channel, which is defined by the inner peripheral side portion and the outer peripheral side portion and a trough portion. An elastomeric energizer is retained within the U-shaped channel to provide resiliency and radial expansion capability to the pressure actuated packing assembly. When a system pressure is introduced to the pressure actuated packing assembly, a force is applied to a first axial mating surface of the jacket member. A sealing insert then applies a force against the energizer, which radially expands the jacket member and urges rib members at the outside of the jacket member to seal against a cylindrical member, which is inserted through a central opening of the jacket member. Due to a shape of the energizer, the pressure actuated packaging assembly needs a large installation space. Furthermore, a responsiveness of the sealing to fast pressure changes and fast movements is not ideal, in particular due to the viscoelastic properties of the energizer. The responsiveness and a flexibility of the sealing might also considerably vary depending on a temperature. No bi-directional sealing functionality is mentioned.

The problem to be solved is to exhibit reliable but cost-effective bi-directional sealing on a valve spindle.

These objects are solved by a sealing system according to claim 1.

It is a sealing system for an annular seal mount for an annular seal mount extending along a circumferential direction about a central axis defining an axial direction.

The sealing system comprises an annular seal member.

The seal member includes two sealing lip portions connected by a connecting portion, wherein the sealing lip portions extend away from the connecting portion towards a first side in the axial direction, wherein the two sealing lip portions and the connecting portion form an annular groove opening towards the first side.

The seal member further includes a spring-elastic spreader for forcing end sections of the sealing lip portions at the first side apart from each other, wherein the spreader is arranged and secured within the groove and forms a channel opening towards the first side.

The sealing system further comprises an expanding ring for abutting on the seal mount at the first side, wherein the expanding ring includes an engagement portion protruding in the axial direction towards a second side, wherein the sealing system is configured such that the engagement portion can be received in the channel.

The sealing system is configured such that, when the seal member is pressed along the axial direction against the engagement portion received within the channel, the engagement portion directly abuts and supports the spreader at a first radial position and a second radial position spaced apart in a radial direction, thereby inducing (preferably additional) spreading force for forcing the end sections of the sealing lip portions apart from each other via the spreader.

A pressure drop from the first side to the second side in the axial direction (also referred to as "forward pressure drop", a pressure drop along a designed seal direction of the seal member) means that a first fluid pressure at the first side of the seal mount (and hence at the first side of the seal member in the axial direction) is larger than a second fluid pressure at the second side of the seal mount

(and hence at the second side of the seal member in the axial direction). A pressure drop from the second side to the first side in the axial direction (also referred to as "reverse pressure drop", a pressure drop along a counter designed seal direction of the seal member) means that the second fluid pressure at the second side of the seal mount (and hence at the second side of the seal member in the axial direction) is larger than the first fluid pressure at the first side of the seal mount (and hence at the first side of the seal member in the axial direction).

The sealing system exhibits a bi-directional sealing function in the axial direction. It reduces the risk of unacceptably high leak rates both for forward pressure drops and reverse pressure drops. Nevertheless, the sealing system is particularly cost-effective, easy to produce, and easy to mount. It requires very little installation space, especially significantly less installation space than a conventional bi-directional sealing system with two scup seals, which are arranged in opposite orientations one behind the other along the axial direction, for example only about half the installation space.

In more detail, the sealing system is particularly cost-effective as it employs an existing seal member type. In this regard, the expanding ring can be regarded as a retrofit component for constituting a new sealing system with an existing seal member.

The sealing system is suitable for sealing between a radially inner element and a radially outer element. The radially inner element may be moveable with respect to the radially outer element. For example, the radially inner element may be rotatable around the central axis and/or moveable along the axial direction with respect to the radially outer element. In one embodiment, the radially inner element is a spindle, a valve shaft, or a drive shaft. The radially outer element may be part of a valve as well, e.g. a part of a housing or an insert of the valve. In particular, the sealing system may be suitable for sealing against a valve spindle in a fluid valve.

In one embodiment, the seal mount is formed by an annular groove in an inner circumference of the radially outer element.

As only one single seal member is needed, contact areas of the seal member with the seal mount are very small. In particular, a contact area with an inner side wall of the seal mount in the radial direction, is very small. Hence, the sealing system ensures low friction between the radially inner element and the radially outer element, even in the cases of high forward pressure drops and high reverse pressure drops. Especially, the sealing system exhibits both low static friction and low dynamic friction. In many applications, lower friction of the sealing between moving parts leads to additional beneficial effects. For example, actuators can be less expensive, smaller, and more lightweight.

The second side is opposite to the first side in the axial direction. The radial direction is (at least substantially) perpendicular to the axial direction. The local circumferential direction is (at least substantially) perpendicular to the axial direction and (at least substantially) locally perpendicular to the local radial direction.

If the sealing system is arranged in the seal mount and a forward pressure drop occurs, the higher pressure from the first side also acts within the groove and the channel. In this case, the higher pressure from the first side forces the end sections of the sealing lip portions apart from each other in the radial direction. As a consequence, the end sections are pressed against side walls of the seal mount. In more detail, the end section of the (radially) inner sealing lip portion (the sealing lip portion with a smaller diameter) is pressed against a (radially) inner side wall of the seal mount and the end section of the (radially) outer sealing lip portion (the sealing lip portion with a larger diameter) is pressed against a (radially) outer side wall of the seal mount. A respective contact pressure increases with increasing forward pressure drop. This ensures proper and tight sealing even in the case of high forward pressure drops.

If the sealing system is arranged in the seal mount and reverse pressure drop occurs, the higher pressure from the second side presses the seal member along the axial direction against the expanding ring. As the engagement portion of the expanding ring is received within the channel of the seal member, the engagement portion directly abuts and supports the spreader. As the seal member, in more detail the spreader, abuts on the engagement portion not only on a single abutment area but at the first radial position and at the second radial position spaced apart in the radial direction, the expanding ring supports the spreader and thus the seal member in a particularly precise, stable, and reliable manner. The present invention reduces a risk that the seal member twist in an unfavorable manner in the case of reverse pressure drops, even in the case of strong reverse pressure drops. Furthermore, the present invention reduces a risk that the spreader displaces relative to the sealing lip portions and/or the connecting portion in the case of reverse pressure drops. The additional expanding ring increases the reliability and the robustness.

In addition, as the spreader abuts on the engagement portion at the first radial position and at the second radial position in the case of a reverse pressure drop and as the first radial position and the second radial position are spaced apart from each other in the radial direction, pressing the seal member onto the engagement member induces spreading force that forces the end sections of the sealing lip portions apart from each other via the spreader. Test showed that the sealing functionality of the sealing system with the seal member and the expanding ring in the case of reverse pressure drops is far better than the seal function of the seal member alone (without the expanding ring). Considerable higher reverse pressure drops are tolerated without unacceptably high leak rates. With the expanding ring, the sealing member exhibits proper and reliable sealing not only in its inherent sealing direction but also in its counter designed seal direction. Together with the expanding ring, bi-directional sealing can be obtained with only the single sealing member. In other words, with the expanding ring, the single sealing member becomes bi-directional (exhibits bi-directional sealing) for many applications.

For example, the sealing system may be configured such that the abutments of the spreader at the first radial position and the second radial position in the case of a reverse pressure drop act as fulcrums (as pivots) for converting (at least) a part of the force, with which the seal member is pressed against the engagement portion by the reverse pressure drop, into induced spreading force forcing the end sections of the sealing lip portions apart from each other via the spreader. The induced spreading force may increase with increasing reverse pressure drop.

The above does in general not exclude that the induced spreading force caused by the reverse pressure drop might partly compensated for, be compensated for, or overcompensated for by other forces induced by the reverse pressure drop. In any case, the induced spreading force contributes to prevent unacceptably high leak rates in the case of reverse pressure drops.

As the spreader forms the channel for receiving the engagement portion, the sealing system needs very little installation space, especially along the axial direction.

The term cross section of an element along the circumferential direction may refer to a local cross-sectional plane of the corresponding element when looking along the circumferential direction. Said local cross-sectional plane may extend along the axial direction and the radial direction. The local cross-sectional plane is perpendicular to the local circumferential direction. The cross section of the corresponding element may be (at least substantially) uniform along the whole circumference. The element may be of (at least substantially) rotationally symmetric shape.

In one embodiment, when the seal member is pressed along the axial direction against the engagement portion received within the channel, the engagement portion may abut the spreader
- with a first abutment area extending along the circumferential direction (around the central axis) at the first radial position and
- with a second abutment area extending along the circumferential direction (around the central axis) at the second radial position.

In more detail, the first abutment area may extend along the circumferential direction at a first radius and the second abutment area may extend along the circumferential direction at a second radius. The second radius is different from the first radius. For example, the second radius may be larger than the first radius. The first abutment area and the abutment area may be concentrically.

The first abutment area may be (at least substantially) circle line shaped. The shape may correspond to a continuous or a discontinuous (broken) circle line. The first abutment area may consist of a plurality of circle arc element-shaped contact portions. The contact portions may be spaced apart from each other. They may be equally spaced in the circumferential direction. The contact portions of the first abutment area may cover at least 30 %, for example at least 40 % of a circumferential length of an imaginary circle with the first radius. A width (thickness) of the first abutment area in the radial direction may be small compared to its radius (for example less than 15 % of the radius, e.g. less than 5 %).

The same embodiments and modifications may additionally or alternatively apply with respect to the second abutment area. For example, the contact portions of the second abutment area may cover at least 30 %, for example at least 40 % of a circumferential length of an imaginary circle with the second radius.

In one embodiment, the first radial position (the first radius) and the second radial position (the second radius) do not change depending on a magnitude of the reverse pressure drop. This ensures precise abutment and friction control.

In one embodiment, the spreader comprises, in a cross-section of the spreader along the circumferential direction, a central portion that is located between the first radial position and the second radial position in the radial direction, wherein the sealing system is configured such that the central portion is prevented from direct abutment on the engagement portion while the engagement portion directly abuts and supports the spreader at the first radial position and the second radial at least if the seal member is pressed along the axial direction against the expanding ring
- by a force less than a force threshold and/or
- by a pressure drop from the second side to the first side of the seal mount (reverse pressure drop) by less than a pressure drop threshold.

This ensures that the abutments at the first radial position and the second radial position act as fulcrums (as pivots) for at least partly converting the axial force towards the first side, which is received by the central portion, into (additional) spreading force for spreading the end sections of the sealing lip portions apart from each other via the spreader.

In one embodiment, the sealing system is configured such that the central portion is (always) prevented from direct abutment on the engagement portion while the engagement portion directly abuts and supports the spreader at the first radial position and the second radial position. In other words, the central portion is prevented from direct abutment on the engagement portion even in the case of excessive reverse pressure drop.

In another embodiment, the sealing system is configured such that the central portion additionally directly abuts on the engagement portion if the seal member is pressed along the axial direction against the expanding ring
- by a force of at least the force threshold and/or
- by a pressure drop from the second side to the first side of the seal mount of at least the pressure drop threshold.

On the one hand, the part of the force exceeding the force threshold/the part of the reverse pressure threshold exceeding the pressure drop threshold cannot be additionally transferred into spreading force. On the other hand, the additional abutment in the case of excessive force and/or excessive reverse pressure drop reduces the risk that the seal member becomes damaged under such conditions. This increases the robustness of the sealing system.

In one embodiment, the sealing system is arranged such that contact areas of the sealing lip portions for abutment with the side walls of the seal mount are located (only) at the end sections of the sealing lip portions.

In one embodiment, the sealing system is configured such that the abutment of the seal member on the engagement portion is limited to a portion of the channel that is closer to the second side in the axial direction than the end sections of the sealing lip portions. Especially, the sealing system may be configured such that abutment of the seal member on the engagement portion can only occur within a bottom portion of the channel extending over a third of a depth of the channel in the axial direction at the maximum. This ensures high elastic flexibility of the end sections of the sealing lip portions in the radial direction. This elastic flexibility can compensate for dimensional changes due to wear and/or temperature variations. As movement of the end sections of the sealing lip portions relative to the expanding ring is allowed and as the end sections are pressed onto the side walls of the seal mount by the spring-elastic spreader, the sealing of the end sections against the side wall is more reliable and adaptive. For example, the application and transfer of spreading forces onto the end sections by the spring-elastic spreader ensures a higher responsiveness to fast movements and fast vibrations as well as to fast pressure changes than a viscoelastic flexibility of the sealing lip portions as such could exhibit.

In one embodiment, the sealing system is configured that the sealing lip portions (in particular the end sections thereof) cannot directly collide with any one of the expanding ring and a bottom wall of the seal mount. This prevents the sealing lip portions from damages.

For example, a length of the engagement portion along the axial direction may be larger than a depth of the channel in the axial direction.

In one embodiment, the length of the engagement portion in the axial direction corresponds to at least 0, 5 mm, e.g. to at least 1,5 mm.

In one embodiment, a width of the engagement portion in the radial direction is increased at an end portion of the expanding ring at the second side. Firstly, this allows for a larger radial distance between the first radial position and the second radial position, thus exhibiting a more stable abutment and a more pronounced fulcrum effect in the case of reverse pressure drops. Secondly, as the width of the engagement portion in the radial direction can be made smaller where the end sections can be located in the axial direction (when the sealing system is arranged), there is more space for resilience of the end sections in the radial direction.

In one embodiment, the spreader is made of metal, for example of stainless steel and/or spring steel. This ensures fast spring-elastic responsiveness, good resistance against fatigue, and high robustness. The spreader should be particularly hard and rugged as it must bear and transfer all forces resulting from the abutment of the seal member on the expanding ring in the case of reverse pressure dops.

According to a further aspect, the spreader may be a meander spring (an annular meander spring). This ensures high flexibility of the seal member and easy mounting of the seal member in the seal mount.

In one embodiment, the sealing system is configured such that the spreader applies a spring-elastic pre-strain spreading force for forcing the end sections of the sealing lip portions at the first side apart from each other if the sealing system is arranged in the seal mount. In other words, the end sections (and in particular the contact areas thereof) are elastically pre-strained against the side walls of the seal mount by the spreader. This ensures proper and reliable sealing. This is true even when neither a forward nor a reverse pressure drop exists.

It is advantageous that the pre-strain spreading force is provided by the spreader independently from any abutment or non-abutment of the seal member onto the expanding ring. This ensures that the pre-strain spreading force is always applied substantially in the same manner, independently of an axial position of the seal member within the seal mount. The pre-strain spreading force is also independent from any dimensional variations of the expanding ring and/or any variations of a length of the seal mount in the axial direction (e.g. due to temperature variations and/or manufacturing tolerances).

According to another aspect, a Young's modulus of a material of the spreader is at least 10 times, maybe at least 50 times, of a Young's modulus of a material of the sealing lip portions and/or the connecting portion. Additionally or alternatively, a hardness of the material of the spreader is at least 10 times the hardness of the material of the sealing lip portions and/or the connecting portion. The spreader distributes the forces caused by the abutment on the expanding ring in the case of reverse pressure drops onto a larger area of the sealing lip portions and/or the connecting portion. Hence, the spreader protects the sealing lip portions and/or the connecting portion and those elements can be of a less hard and/or less stiff material. As a consequence, there is more freedom to choose a material for those elements that exhibits low static and dynamic friction.

According to one aspect, the connecting portion and the sealing lip portions may be formed in one piece. This allows high reliability, fast production, and low costs. It also facilitates mounting.

In one embodiment, the sealing lip portions and/or the connecting portion are made of a fluoropolymer. For example, the sealing lip portions are made of polytetrafluoroethylene (PTFE). In addition or alternatively, the connecting portion is made of PTFE. In more detail, the material may be virgin PTFE or PTFE with fillers. This ensures low friction and good chemical resistance. The sealing system is less prone to cause wear. Finally, the reliability, lifespan, and efficiency of the sealing system and any device employing the sealing system are improved. Alternatively, any existing or future materials that are suitable for replacing PTFE can be used.

According to a further aspect, the seal member has an at least substantial U-, V-, Y- or horseshoe-shaped cross-section along the circumferential cross-section. This facilitates inserting the engagement portion into the channel.

For example, the annular seal member may be a spring-energized seal, i.e. a spring-energized U-cup seal.

According to a further aspect, the expanding ring may be (at least substantially) rigid along the axial direction. This ensures precise abutment of the spreader and precise positioning of the seal member in the case of reverse pressure drops. In one embodiment, the whole expanding ring is completely rigid. Additionally or alternatively, the whole expanding ring may be solid.

In one embodiment, the expanding ring exhibits, at a portion in the axial direction where the expanding ring is configured to abut on the spreader, a limited spring-elastic flexibility in the radial direction. This is a further approach to ensure high elastic flexibility of the end sections of the sealing lip portions in the radial direction. For example, even if that the contact areas of the sealing lip portions overlap, in in the axial direction, with the portion where the expanding ring is configured to abut on the spreader, this embodiment ensures the radial spring-elastic flexibility at the contact areas of the sealing lip portions.

The expanding ring may be formed in one piece. In one embodiment, the expanding ring is made of metal, for example of stainless steel. This ensures good resistance against fatigue and high robustness. The expanding ring should be particularly hard and rugged as it must bear and transfer the forces resulting from the abutment of the seal member in the case of reverse pressure dops.

In one embodiment, the spreader may be an annular spring member.

According to a further aspect, the spreader may be secured to the sealing lip portions and/or to the connecting portion. In one embodiment, the spreader is secured at least to the sealing lip portions. For example, first side ends of the spreader might be secured in grooves and/or edges located at the end sections of the sealing lip portions.

In one embodiment, a shape of the spreader corresponds (at least substantially) to a shape of the groove.

Additionally or alternatively, the spreader may at least substantially line the groove, in other words line surfaces of the connecting portion and the sealing lip portions that face the channel. The channel may at least substantially correspond to the groove (e.g. in geometry, size, and/or location).

In one embodiment, a wall thickness of the spreader is less than 0,5 mm, for example between 0,04 mm and 0,2 mm. This allows for a low weight and a high flexibility of the end sections of the sealing lip portions in the radial direction.

In one embodiment, the expanding ring comprises a base portion for abutting in the axial direction on an end of the seal mount at the first side (also referred to the bottom wall of the seal mount), wherein the engagement portion protrudes from the base portion in the axial direction towards the second side, wherein, in a cross-section of the expanding ring along the circumferential direction, a width of the base portion in the radial direction is larger than a maximum width of the engagement portion in the radial direction. This prevents that the expanding ring is tilted. The base portion transmits the axial force resulting from the abutment of the seal member on the expanding ring in the case of reverse pressure drops onto the seal mount.

According to one aspect, the radial distance between the first radial position and the second radial position may correspond to at least 15 % of a width of the channel in the radial direction, for example to at least 20 %. This exhibits a sufficiently stable support and fulcrum (pivot) effect in the case of reverse pressure drops. The width of the channel may be a difference in the radii of an outer side wall and an inner side wall of the channel at the same position in the axial direction, wherein the position in the axial direction is chosen such that said difference becomes the maximum.

Additionally or alternatively, the radial distance between the first radial position and the second radial position may correspond to less than 95 % of the width of the channel in the radial direction, maybe to less than 70 %, e.g. to less than 50 %. This ensures easy insertion of the engagement portion into the channel and sufficient flexibility of the end sections of the sealing lip portions.

In one embodiment, the radial distance between the first radial position and the second radial position may correspond to at least 11 % width of the connecting portion in the radial direction, for example to at least 14 %. This exhibits a sufficiently stable support and fulcrum effect in the case of reverse pressure drops. The width of the connecting portion may be a difference in the radii of an outer side wall and an inner side wall of the connecting portion.

Additionally or alternatively, the radial distance between the first radial position and the second radial positions corresponds to at least 0,12 mm, preferably to at least 0,18 mm. Correspondingly, in the cross-section of the spreader along the circumferential direction, the central portion may have a width (i.e. a distance between a radially inner end of the central portion and a radially outer end of the central portion) of at least 0,12 mm, preferably of at least 0,18 mm.

In one embodiment, when the engagement portion directly abuts and supports the spreader, a fluid passage remains between
- a channel chamber constituted at a bottom of the channel, wherein said channel chamber is defined between the engagement portion and the central portion of the spreader, and
- the opening of the channel.

Such a fluid passage may be referred to as "channel fluid passage".

The channel fluid passage allows that fluid can flow between the channel chamber and the first side of the seal mount. This prevents that fluid is completely enclosed in the channel chamber when the seal member travels into abutment with the expanding ring in the case of reverse pressure drops. The fluid can escape from the channel chamber through the channel fluid passage. This avoids excessive fluid pressure in the channel chamber. Such an excessive fluid pressure could prevent that the load from the seal member is precisely transferred to the expanding ring only at the first radial position and the second radial position. Vice versa, the channel fluid passage prevents that a negative pressure with respect to the pressure at the first side of the seal mount is formed when the seal mount starts to lift off from the engagement portion in the case that a reverse pressure drop turns into a forward pressure drop. Such a negative pressure may slow down the seal member's lift off and may hence impair the responsiveness of the sealing system to changes between forward pressure drops and forward pressure drops.

For example, the channel fluid passage may remain between the channel chamber and the opening of the channel at a radially inner side with respect to the expanding ring and/or the channel fluid passage may remain between the channel chamber and the opening of the channel at a radially outer side with respect to the expanding ring.

The channel fluid passage may be formed by at least one recess in the spreader, especially by a plurality of recesses in the spreader at the first radial position and/or the second radial position. In one embodiment, the spreader is the meander spring and the recesses of the meander spring in the abutment area(s) form the fluid passage(s). Additionally or alternatively, the channel fluid passage includes at least one recess and/or fluid duct formed in the engagement portion. Additionally or alternatively, the expanding ring includes at least one radial fluid passage. The at least one radial fluid passage allows passage of fluid between the radially outer side of the engagement member and the radially inner side of the engagement member even if the seal member abuts on the engagement portion. This prevents that fluid is completely enclosed at the radially outer side of the engagement member in the case of reverse pressure drops. Furthermore, it allows fluid to flow from the radially inner side of the engagement member to its radially outer side in the case a reverse pressure drop turns into a forward pressure drop even before the seal member has lifted off from the engagement portion. This results in quicker and more reliable generation of the contact pressure of the radially outer sealing lip portion onto the outer side wall of seal mount that is caused by the forward pressure drop.

The object mentioned above is further solved by a fluid valve including a seal mount and sealing system according to the present disclosure arranged in the seal mount. Features, embodiments, modifications, and advantages described with regard to the sealing system and the seal mount apply accordingly with respect to the fluid valve and vice versa.

In one embodiment, the sealing system seals against a valve spindle. For example, the valve spindle may constitute the radially inner element mentioned above.

In one embodiment, the fluid valve may be a stepper motor valve.

According to a further aspect, the fluid valve may be an expansion valve.

In one embodiment, the fluid valve is configured such that limited movement of the seal member in the axial direction within the seal mount is allowed. In other words, the seal member can (at least slightly) lift off from the expanding ring. By this, a high flexibility of the end sections of the sealing lip portions is ensured despite of dimensional variations (e.g. due to temperature differences or manufacturing tolerances). In the case of forward pressure drops, the seal member travels in the axial direction towards the second side and abuts on a wall of the seal mount at the second side in the axial direction (also referred to as top wall of the seal mount). The spreader lifts of from the expanding ring. Accordingly, the higher pressure from the first side can distribute more quickly within the complete channel. Nevertheless, always at least 50 % of the length of the engagement portion may remain within the channel, for example at least more than 70 %. In the case of reverse pressure drops, the seal member travels in the axial direction towards the first side and abuts, via the engagement portion, on the bottom wall of the seal mount. A gap is formed between the top wall of the seal mount and the connecting portion. Accordingly, the higher pressure from the second side can distribute uniformly over a whole width of the end of the seal member at the second side in the axial direction. This results in proper abutment of the seal member on the engagement portion and prevents the seal member from unsymmetric distortion.

In one embodiment, the expanding ring is rigidly fixed to the seal mount. The expanding ring (or parts thereof) may be formed integrally with the seal mount.

The object mentioned above is further solved by a sealing method according to claim 15.

The sealing method comprises the step of providing an annular seal member and an expanding ring arranged in an annular seal mount extending along a circumferential direction about a central axis defining an axial direction,
wherein the annular seal member includes
- two sealing lip portions connected by a connecting portion, wherein the sealing lip portions extend away from the connecting portion towards a first side in the axial direction, wherein the two sealing lip portions and the connecting portion form an annular groove opening towards the first side, and
- a spring-elastic spreader for spreading forcing end sections of the sealing lip portions at the first side apart from each other, wherein the spreader is arranged and secured within the groove and forms a channel opening towards the first side; and
wherein the expanding ring includes an engagement portion that protrudes in the axial direction towards the second side and is received in the channel

The methods further includes pressing the seal member along the axial direction against the engagement portion, e.g. by a pressure drop from the second side to the first side of the seal mount, wherein the engagement portion directly abuts and supports the spreader at a first radial position and a second radial position spaced apart in a radial direction, thereby inducing additional spreading force for spreading forcing the end sections of the sealing lip portions apart from each other via the spreader.

The features, embodiments, modifications, and advantages described with regard to the sealing system and the fluid valve apply accordingly with respect to the method and vice versa. For example, the sealing method includes the step of providing the sealing system according to any one of the embodiments described elsewhere.

Still further, the object mentioned above is solved by replacing a bi-directional sealing system with two seal members, which are arranged one behind the other along the axial direction and in opposite orientation with a sealing system according to the present application, for example in any one of a stepper motor valve and an expansion valve.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.
- Fig. 1: shows a first embodiment of a sealing system according to the present invention mounted in a seal mount in the case of a forward pressure drop (i.e. a pressure drop along a designed seal direction of a seal member) in a cross-sectional view;
- Fig. 2: shows the seal arrangement of Fig. 1 in the case of a reverse pressure drop (i.e. a pressure drop opposite to the designed seal direction) in a cross-sectional view;
- Fig. 3: shows the sealing system of Fig. 1 in an unmounted state in a partial perspective view;
- Fig. 4: shows a view on a cross-section of an expanding ring of the sealing system of Figs. 1 to 3 in a plane with a central axis;
- Fig. 5: shows an expansion valve with the sealing system of Fig. 1 sealing between a valve spindle and a housing of the valve;
- Fig. 6: shows a second embodiment of a sealing system according to the present invention mounted in a seal mount in the case of a forward pressure drop in a cross-sectional view; and
- Fig. 7: shows the seal arrangement of Fig. 6 in the case of a reverse pressure drop in a cross-sectional view.

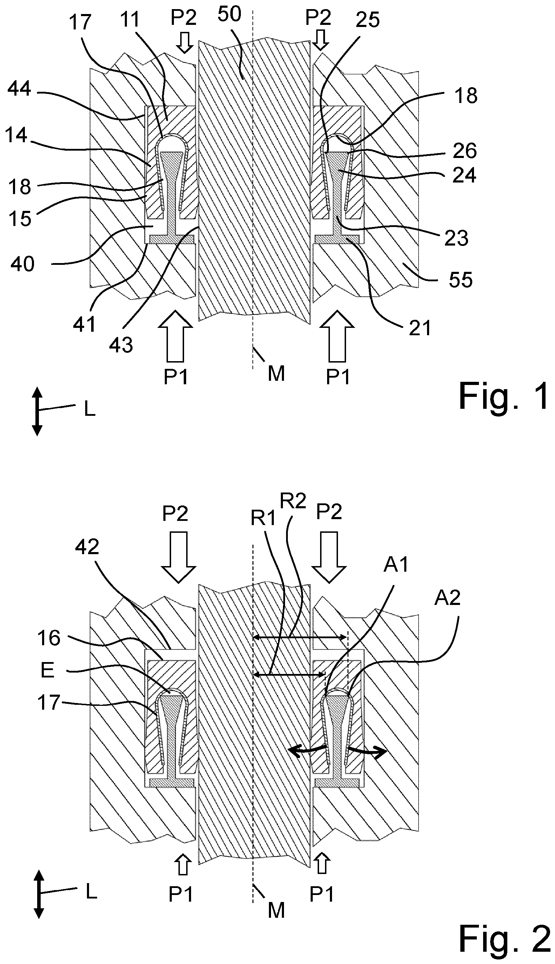

Fig. 1 shows a first embodiment of a sealing system 1 according to the present invention. The sealing system 1 is arranged in a seal mount 40. The seal mount 40 is formed between a radially inner element 50 and a radially outer element 55. The radially inner element 50 and the radially outer element 55 may be part of a fluid valve. The radially outer element 50 may be a housing or a housing insert. The radially inner element 55 may be a valve spindle, a drift shaft, a nozzle shaft, a push pin, a rod (e.g. a push rod), or the like.

In this exemplary seal arrangement, the seal mount 40 is formed by an annular groove in an inner circumferential surface of the radially outer element 55 that faces an outer circumferential surface of the radially inner element 50. In this example, a cross-section of the seal mount 40 seen along a circumferential direction is rectangular. The seal mount 40 extends annularly around a central axis M and is rotationally symmetric. It is defined by an end wall at a first side in an axial direction L (also referred to as bottom wall 41), by an end wall at a second side in the axial direction L (also referred to as top wall 42), by a (radially) inner side wall 43, and by a (radially) outer side wall 44. The inner side wall 43 of the seal mount 40 is constituted by a portion of the outer circumferential surface of the radially inner element 50 facing the groove that forms the seal mount 40. In general, it is also possible that the seal mount has another shape. For example, the seal mount may have a (slightly) trapezoidal, semi-trapezoidal, barrel-like, barrel-half-like shape, or the like.

The sealing system 1 as such consist of a single annular seal member 10 and a single expanding ring 20. In this embodiment, both the seal member 10 and the expanding ring 20 constitute separate units. Together, they constitute a sealing kit for mounting in the seal mount 40. The sealing kit may be provided separately from the seal mount 40. Alternatively, the expanding ring 20 can be formed integrally with the seal mount 40. In this case, only the seal member 10 is a separate element.

In this exemplary embodiment, the seal member 10 is a spring-energized U-cup seal.

The seal member 10 extends along the circumferential direction about the central axis M. It forms a central, disc-shaped opening for receiving the radially inner element 50, in more detail for sticking the radially inner element 50 through.

The seal member 10 includes two sealing lip portions 12, 14 and a connecting portion 11. The sealing lip portions 12, 14 substantially extend from the connecting portion 11 along the axial direction L towards the first side. In other words, free end sections of the sealing lip portions 12, 14 point towards the first side.

In this exemplary embodiment, the sealing lip portions 12, 14 and the connecting portion 11 are formed in one piece. Together, they form a seal part of the seal member. A cross-section of the seal part seen along a circumferential direction (i.e. at every angular position around the central axis M) is substantially U-shaped. The seal part is rotationally symmetric. The sealing lip portions 12, 14 and the connecting portion 11 hence form an annular groove (the interior of the U) opening towards the first side.

The sealing lip portions 12, 14 and the connecting portion 11 are made of polytetrafluoroethylene (PTFE). This ensures low static and dynamic friction for rotation of the radially inner element 50 about the central axis M relative to the radially outer element 55 and for movement of the radially inner element 50 along the central axis M relative to the radially outer element 55. The PTFE may be without fillers (also referred to as virgin PTFE) or with fillers (e.g. fiber glass pieces). The seal member 10 further comprises a spring-elastic annular spreader 17 made of metal, e.g. of stainless steel. In this exemplary embodiment, a cross-section of the spreader 17 along the circumferential direction substantially corresponds to the shape of the groove. The cross-section of the spreader 17 also has a U-like shape. The spreader 17 forms an annular channel (the interior of the U-shape) opening towards the first side. In this embodiment, the spreader 17 is a meander spring. Apart from the meander structure, it is rotationally symmetric.

The spreader 17 is arranged within the groove. It is secured to the two sealing lip portions 12, 14. In more detail, in the cross-section of the spreader 17 along the circumferential direction, first side ends of the legs of the spreader 17 are secured within small edges formed at the end sections of the sealing lip portions 12, 14 and at a respective side facing the channel 18.

If the seal member 10 is mounted in the seal mount 40, the end sections of the sealing lip portions 12, 14 are displaced by the side walls 43, 44 of the seal mount 40, against a spring-elastic force provided by the spreader 17.

In more detail, the first sealing lip portion 12 (the radially inner sealing lip portion) abuts the inner side wall 43 with a contact area 13, which is located at the end section of the first sealing lip portion 12 and faces the inner side wall 43. The inner side wall 43 urges the first sealing lip portion 12 radially outwards (towards the intermediate portion 23 of the expanding ring 20). The second sealing lip portion 14 (the radially outer sealing lip portion) abuts the outer side wall 44 with a contact area 15, which is located at the end section of the second sealing lip portion 14 and faces the outer side wall 44. The outer side wall 44 urges the end section of the second sealing lip portion 14 radially inwards (towards the intermediate portion 23 of the expanding ring 20). As a consequence, the spring-elastic restoring force provided by the spreader 17 presses the end sections of the sealing lip portions 12, 14 against the side walls 43, 44. The seal member 10 is pre-strained (energized) by the spreader 17. In other words, the spreader 17 applies a "pre-strain spreading force" forcing the end sections of the sealing lip portions 12, 14 apart from each other. This contributes to proper and reliable sealing.

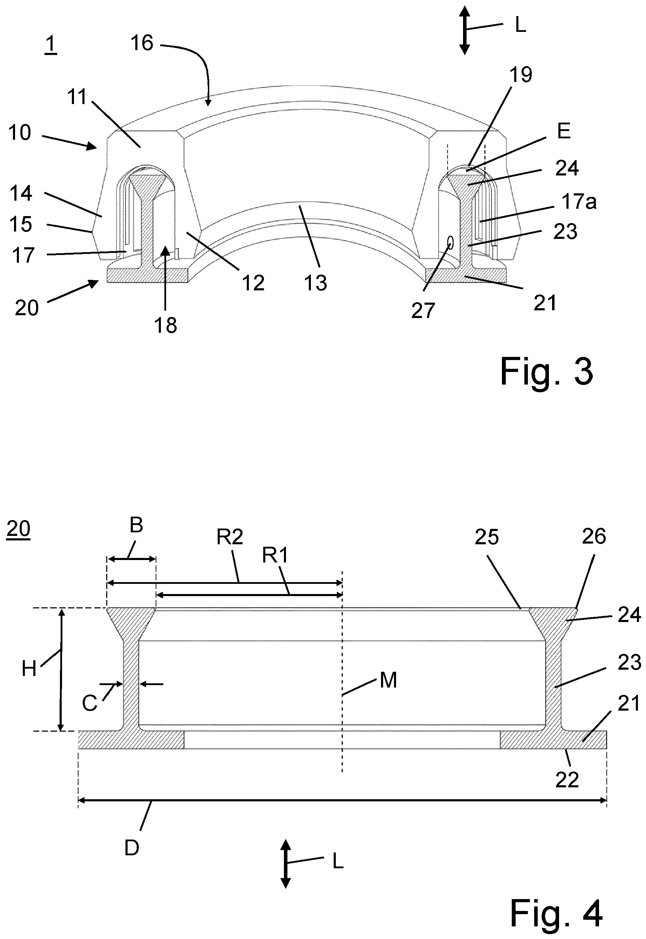

Fig. 4 shows the expanding ring 20 in more detail. In this embodiment, the expanding ring 20 is formed in one piece and made of stainless steel. The expanding ring 20 includes a base portion 21 and an engagement portion. The engagement portion extends from the base portion 21 in the axial direction L towards the second side. It protrudes from the base portion 21 with a length H in the axial direction L. As a non-limiting example, the length H may be in the range from 1,5 mm to 2,5 mm. In more general, the length H may correspond to a depth of the channel 18 in the axial direction L plus a safety distance. For example, the safety distance can be larger than 0,1 mm, e.g. 0,5 mm.

The engagement portion comprises a cylinder-jacket-shaped intermediate portion 23 adjacent to the base portion 21 and an end portion 24. The end portion 24 forms the end of the expanding ring 20 at the second side in the axial direction L. A total diameter D of the expanding ring 20 may be in the range from 4 mm to 10 mm, e.g. in the range from 5 mm to 6 mm. A nominal diameter of the expanding ring 20 may at least substantially correspond to a nominal diameter of the seal member 10. For example, a difference between said two nominal diameters may be less than 10 percent of the greater of the two nominal diameters. Additionally or alternatively, the nominal diameter of the expanding ring may at least substantially correspond to a nominal diameter of the seal mount 40.

A surface 22 of the base portion 21 at the first side is configured for abutting onto the bottom wall 41 of the seal mount 40. A width of the base portion 21 in the radial direction is larger than a of the intermediate portion 23. This allows for stable abutment of the expanding ring 20 on the bottom wall 41.

In the end portion 24, a width (or thickness) of the engagement portion in the radial direction is increased. The engagement portion has its maximum width B in the radial direction at its second side end.

The sealing system 1 is configured such that the engagement portion of the expanding ring 20 is (partially) inserted into the channel 18.

If the engagement portion is inserted into the channel 18 and if the seal member 10 and the expanding ring 20 are pressed against each other in the axial direction, the spreader 17 abuts the engagement portion at a first axial position (at a first radius R1) and at a second axial position (at a second radius R2). The second radius R2 is larger than the first radius R1.

As the engagement portion has its maximum width B at its second side end, the difference between the second radius R2 and the first radius R1 corresponds to said maximum width B.

Fig. 1 shows a situation, in which a forward pressure drop occurs. A fluid pressure P1 at the first side of the seal mount 40 is larger than a fluid pressure P2 at the second side of the seal mount 40. Naturally, the pressures P1 and P2 as such are not vector quantities. The arrows denoted with P1 and P2 are only intended to illustrate in schematic manner from which side of the seal mount 40 the respective pressure is applied. The arrows denoted with P1 and P2 have different sizes in order to schematically show which of the pressures P1 and P2 is larger. This applies accordingly with respect to Figs. 2 and 5 to 7 as well.

In Fig. 1, the seal member 10 directly abuts the top wall 42 of with the connecting portion 11, namely with a surface 16 thereof at the second side in the axial direction L. The larger pressure P1 also acts within the channel 18. Hence, the forward pressure drop induces a spreading force for forcing the end sections of the sealing lip portions 12, 14 apart from each other in the radial direction. This spreading force induced by the forward pressure drop is provided in addition to the pre-strain spreading force provided by the spreader 17. As a consequence, a sealing force is increased when the forward pressure drop over the seal member 10 increases.

Accordingly, the seal member 10 has a designed seal direction. The designed seal direction corresponds to sealing against a forward pressure drop.

Fig. 2 shows a situation, in which a reverse pressure drop occurs. The fluid pressure P1 at the first side of the seal mount 40 is smaller than a fluid pressure P2 at the second side of the seal mound 40. In other words, in this case, the pressure drop occurs along a direction opposite to the designed seal direction of the seal member 10 (i.e. in a "counter designed seal direction").

The seal member has been displaced within the seal mount 40 in the axial direction L towards the first side. The spreader 17 of the seal member 10 directly abuts the engagement portion of the expanding ring 20. The reverse pressure drop (i.e. P2 - P1) presses the seal member 10 against the expanding ring 20.

In more detail, the engagement portion (namely its end portion 24) directly abuts and supports the spreader 17 at the first radial position R1 (at the first radius R1) and at the second radial position R2 (at the second radius R2). The first radial position R1 and the second radial position R2 are spaced apart in the radial direction. This induces a spreading force for forcing the end sections of the sealing lip portions 12, 14 apart from each other in the radial direction via the spreader 17. This spreading force induced by the reverse pressure drop is provided in addition to the pre-strain spreading force provided by the spreader 17. As a consequence, an unacceptably high leak rate is prevented even in the case of high reverse pressure drops. The sealing force is increased with increased pressure drop along the counter designed sealing direction. With the shown embodiment, a capability to keep the leak rate sufficiently low is increased. In more detail, the pressure drop along counter designed sealing direction has to be significantly higher before unsatisfactory high leak rates occurs (especially compared to a seal arrangement without the expanding ring 20). The seal system 1 can however be designed so that the sealing force increases even further and leak rates will be similar to those in the designed sealing direction.

The abutments at the first radial position R1 and the second radial position R2 act as fulcrums for forces applied to the seal member 10 in the axial direction L towards the first side, the fulcrums converting at least a part of these forces into the additional spreading force. Two effects may be noted. As a first effect, the abutments at the first radial position R1 and the second radial position R2 act as pivot points for torques resulting from axial forces towards the first side that are received by the central portion 19. The spreader 17 elastically transfers said torques from the pivot points to the end portion of the respective sealing lip portion 12, 14. As a second effect, the axial forces acting on the spreader 17 towards the first side cause that the spring-elastic spreader 17 is further expanded and slides in the axial direction L further towards the second side if the reverse pressure drop increases. This results in further induced spreading force.

The pre-strain spreading force and the spreading force resulting from the reverse pressure drop add up. Due to the pre-strain spreading force, it is not necessary that the spreading force induced by the reverse pressure drop alone completely compensates for all effects forcing the end sections of the lip portions 12, 14 together in the radial direction. Such antagonistic squeezing forces may arise, for example, from the fact that the reverse pressure drops also acts on the side surfaces of the sealing lip portions 12, 14 adjacent to the side walls 41 , 42 of the seal mount 40.

The sealing lip portions 12, 14 and the connecting portion 11 never directly abut the expanding ring 20. The seal member 10 abuts the expanding ring 20 only with the spreader 17. In this embodiment, a central portion 19 of the spreader 17, which extends between the first radial position R1 and the second radial position R2, never directly abuts the engagement member (or the expanding ring 20 at all).

As a thickness (or width) C of the intermediate portion 23 in the radial direction is smaller than in the end portion 21 and the base portion 24, the end sections of the sealing lip portions 12, 14 are free to be displaced in the radial direction towards the intermediate portion 23, against the spring-elastic force provided by the spreader 17. This ensures good flexibility and responsiveness of the sealing function provided by the sealing lip portions 12, 14.

When the sealing system 1 is mounted in the seal mount 40, an axial position of the abutment areas A1, A2 is spaced apart from an axial position of the end sections of the sealing lip portions 12, 14, especially from an axial position of the contact areas 13, 15. This applies irrespective of whether the seal member 10 is in the axial position shown in Fig. 1, the axial position shown in Fig. 2, or in an intermediate axial position. The end sections 12, 14 and especially the contact areas 13, 15 can easily adapt to vibrations, dimensional changes, and the like while the contact between the contact areas 13, 15 and the side walls 43, 44 of the seal mount 40 is always maintained.

In this embodiment, the spreader 17 is a meander spring.

Therefore, the abutment area A1 has the shape of a broken circle line with radius R1 and the abutment area A2 has the shape of a broken circle line with radius R2. The abutment area A1 is formed by abutment of a radially inner edge 25 of the end portion 24 onto the spreader 17. The abutment area A2 is formed by abutment of a radially outer edge 26 of the end portion 24 onto the spreader 17.

When the engagement portion of the expanding ring 20 directly abuts and supports the spreader 17, a channel chamber E is formed between the engagement portion, in more detail between the end portion 24 of the and the central portion 19 of the spreader (see Fig. 3). However, recesses 17a of the meander spring (the spreader 17) allow fluid to flow between the channel chamber and the opening of the groove 18. Furthermore, even if the expanding ring 20 directly abuts the spreader 17, fluid can flow from a radially outer side of the engagement portion to a radially inner side of the engagement portion and vice versa through the recesses 17a and the channel chamber E.

Further, a plurality of radial fluid ducts 27 is formed in the expanding ring 20. Each radial fluid duct 27 allows for fluid communication between the radially outer side of the expanding ring 20 and the radially inner side of the expanding ring 20. In this exemplary embodiment, each fluid duct 27 is located in the intermediate portion 23 near to the base portion 21 and is constituted from a bore extending (at least substantially) in the radial direction. The individual fluid ducts 27 are provided evenly spaced along the circumferential direction.

The sealing system 1 is configured such that direct contact between the expanding ring 20 and the radially inner element 50 is prevented. This ensures low friction.

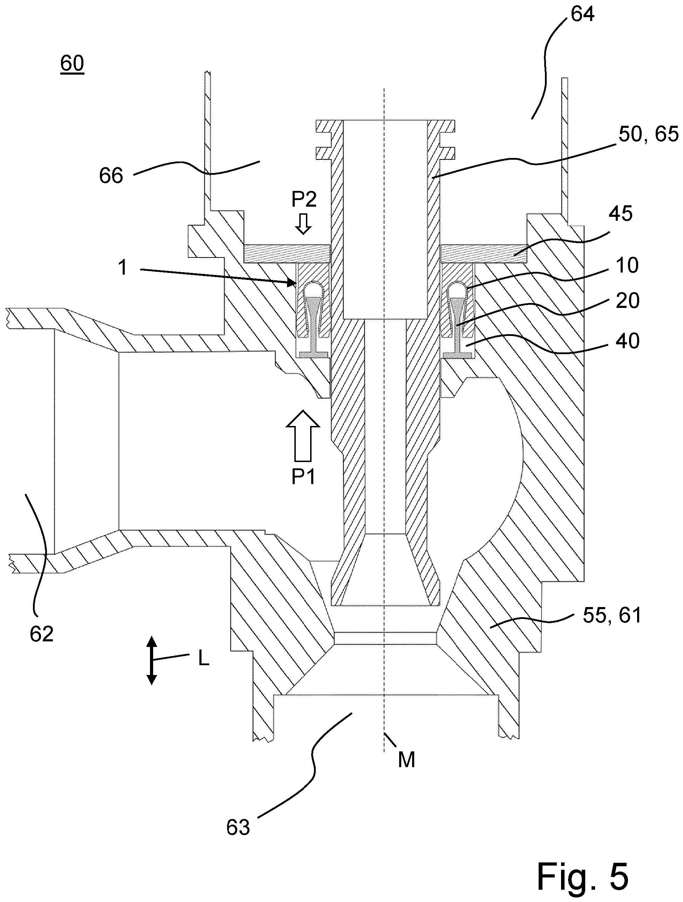

Fig. 5 shows a fluid valve 60 comprising the sealing system 1 of Fig. 1. In this exemplary embodiment, the fluid valve 60 is an expansion valve. The sealing system 1 is employed for sealing between a valve spindle 65 and a housing 61 of the valve 60. The seal mount 40 is formed by the housing 61, the valve spindle 65, and an annular retaining ring 45. In other words, the valve spindle 65 corresponds to the radially inner element 50 in Fig. 1 whereas the housing 61 with the retaining ring 45 corresponds to the radially outer element 55 in Fig. 1.

The fluid valve 60 comprises at least one fluid inlet 62 and at least one fluid outlet 63. The at least one fluid inlet 62 and/or the at least one fluid outlet 63 may be formed by the housing 61.

The fluid valve 60 may further comprise a drive section. The drive section 64 may include an actuator (not shown). The actuator is configured to move the valve spindle 65 relative to the housing 61.

Although it is expected that, in normal operation, a fluid pressure P1 at the side of the seal mount 40 in the axial direction L where the at least one fluid inlet 62 and the at least one fluid outlet 63 are arranged is typically higher than a fluid pressure P2 at the opposite second side of the seal mount 40 where the drive section 64 is located (P1 > P2, forward pressure drop), it may occur under certain circumstances that the fluid pressure P2 becomes higher than the fluid pressure P1 (P2 > P1, reverse pressure drop).

The sealing system 1 exhibits bi-directional sealing. It replaces a conventional bi-directional sealing system with two cup seals, which are arranged in opposite orientations one behind the other along the axial direction L.

The sealing system 1 prevents proper and reliable sealing in the case of forward pressure drops (i.e. along the designed seal direction) and in the case of reverse pressure drops (i.e. opposite to the designed seal direction) as well. Only one single seal element 10 is employed. The sealing system 1 is small, lightweight, cost-effective, and easy to produce. As there is only one seal element 10 and only one small contact area with the spindle valve 64, both the static friction and the dynamic friction are very low. As a consequence, the actuator is made smaller, less expensive, and more lightweight.

The conventional bi-directional sealing system has approximately twice the length in the longitudinal direction L as the sealing system 1 because installation space for the two seal members and a partition wall between the two seal members is needed. Furthermore, there are more contact areas and hence there is more friction.

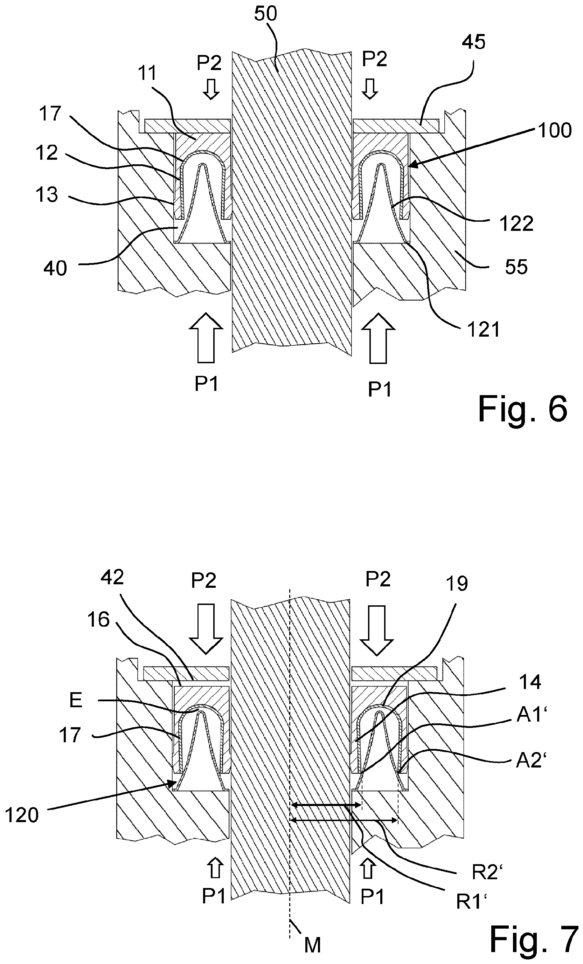

Figs. 6 and 7 show a second embodiment of a sealing system 100 according to the present invention. The sealing system 100 is mounted in a seal mount 40. Fig. 6 shows the situation of a forward pressure drop while Fig. 7 shows the situation of a reverse pressure drop.

The sealing system 100 shown in Figs. 6 and 7 is of similar structure and exhibits similar functionalities and advantages than the sealing system 1 depicted in Figs. 1 to 5. Identical elements and features are indicated by the same reference signs. In particular, the same seal member 10 is employed.

Correspondingly, only the differences between the sealing system 100 and the sealing system 1 are explained. The sealing system 100 employs a different expanding ring 120. It is (at least substantially) rotationally symmetric and extends annularly around the central axis M.

In this embodiment, the expanding ring 120 comprises an engagement portion 122 having a substantially V-like shape in a cross-section seen along a circumferential direction. A closed tip of the engagement portion 122 points towards the second side in the axial direction L and is received in the channel 18. At an end of the engagement portion 122 at the first side in the axial direction L, a flange is formed. In this case, the flange constitutes the base portion 121. In the case of reverse pressure drops as shown in Fig. 7, the spreader 17 directly abuts the engagement portion 122 at a first radial position R1' (at a first radius R1') and at a second radial position R2' (at a second radius R2'). In this embodiment, the abutment areas A1' and A2' between the spreader 17 and the engagement portion 122 are located at the end sections of the spreader 17 at the first side. An axial position of the abutment areas A1' and A2' is axially displaced with regard to the axial position of the contact areas 13, 15 of the sealing lip portions 12, 14. While the axial position of the abutment areas A1 and A2 in Fig. 2 is axially displaced towards the second side, the axial position of the abutment areas A1' and A2' is axially displaced towards the first side in Fig. 7. Further, an axial distance between the abutment areas A1' and A2' and the contact areas 13, 15 is less than in Fig. 2. In order to ensure sufficient resilience of the end sections and the contact areas 13, 15 of the sealing lip portions 12, 14 in the radial direction, the expanding ring 120 exhibits spring-elastic resilience at the axial position of the abutment areas A1' and A2'.

Radial fluid ducts (not shown) may be provided in a (radially) inner leg and/or a (radially) outer leg of the engagement portion 122.

Fig. 7 shows a situation where the reverse pressure drop is less than a pre-determined pressure drop threshold. In this embodiment, the central portion 19 of the spreader 17 directly abuts on the engagement portion 122, namely on the closed tip at the end of the engagement portion 122 at the second side in the axial direction L, if the reverse pressure drop exceeds the pressure drop threshold (not shown). An additional abutment area is formed at the closed tip. This facilitates to maintain the correct alignment and position of the seal member 10 in the case of excessive reverse pressure drops. However, the additional abutment of the central portion 19 may lead to reduced resilience of the end sections of the sealing lip portions 12, 14 in the radial direction and to increased friction. Therefore, it is beneficial that the abutment at the central portion 19 is prevented as long as the reverse pressure drop is less than the pressure drop threshold.

### List of reference signs:

- 1; 100: sealing system
- 10: seal member
- 11: connecting portion
- 12, 14: sealing lip portion
- 13, 15: contact area
- 16: surface
- 17: spreader
- 17a: recess
- 18: groove
- 19: central portion
- 20; 120: expanding ring
- 21; 121: base portion
- 22: surface
- 23: intermediate portion (engagement portion)
- 24: end portion (engagement portion)
- 25: inner edge
- 26: outer edge
- 27: fluid ducts
- 40: seal mount
- 41: bottom wall
- 42: top wall
- 43: inner side wall
- 44: outer side wall
- 45: retainer ring
- 50: radially inner element
- 55: radially outer element
- 60: fluid valve
- 61: valve housing
- 62: fluid inlet
- 63: fluid outlet
- 64: drive section
- 65: valve spindle
- 122: engagement portion
- A1, A1': first abutment area
- A2, A2': second abutment area
- B, C: width
- H: length
- D: diameter
- E: channel chamber
- L: axial direction
- M: central axis
- R1, R1': first radial position (first radius)
- R2, R2': second radial position (second radius)
- P1, P2: fluid pressure

## Claims

1. Sealing system (1; 100) for an annular seal mount (40) extending along a circumferential direction about a central axis (M) defining an axial direction (L), for exhibiting a bi-directional sealing function in the axial direction (L), the sealing system (1; 100) comprising:
an annular seal member (10) including
- two sealing lip portions (12, 14) connected by a connecting portion (11), wherein the sealing lip portions (12, 14) extend away from the connecting portion (11) towards a first side in the axial direction (L), wherein the two sealing lip portions (12, 14) and the connecting portion (11) form an annular groove opening towards the first side, and
- a spring-elastic spreader (17) for forcing end sections of the sealing lip portions (12, 14) at the first side apart from each other, wherein the spreader (17) is arranged and secured within the groove and forms a channel (18) opening towards the first side; and
an annual support member (20; 120) for abutting on the seal mount (40) at the first side, wherein the support member (20; 120) includes an engagement portion (23, 24; 122) protruding in the axial direction (L) towards a second side, wherein the sealing system (1; 100) is configured such that the engagement portion (23, 24; 122) is received in the channel (18),
**characterized in that** the sealing system (1; 100) is configured such that, when the seal member (10) is pressed along the axial direction (L) against the engagement portion (23, 24; 122) received within the channel (18), the engagement portion (23, 24; 122) directly abuts and supports the spreader (17) at a first radial position (R1; R1') and a second radial position (R2; R2') spaced apart in a radial direction, thereby inducing spreading force for forcing the end sections of the sealing lip portions (12, 14) apart from each other via the spreader (17).

2. Sealing system (1; 100) according to claim 1, wherein the spreader (17) comprises, in a cross-section of the spreader (17) along the circumferential direction, a central portion (19) that is located between the first radial position (R1; R1') and the second radial position (R2; R2') in the radial direction,
wherein the sealing system (1; 100) is configured such that the central portion (19) is prevented from direct abutment on the engagement portion (23, 24; 122) while the engagement portion (23, 24; 122) directly abuts and supports the spreader (17) at the first radial position (R1; R1') and the second radial (R2; R2') at least if the seal member (10) is pressed along the axial direction (L) against the support member (20; 120)
- by a force less than a force threshold and/or
- by a pressure drop from the second side to the first side of the seal mount (40) by less than a pressure drop threshold.

3. Sealing system (1) according to claim 2, wherein the sealing system (1) is configured such that the central portion (19) is prevented from direct abutment on the engagement portion (23, 24) while the engagement portion (23, 24) directly abuts and supports the spreader (17) at the first radial position (R1) and the second radial position (R2).

4. Sealing system (100) according to claim 2, wherein the sealing system (100) is configured such that the central portion (19) additionally directly abuts on the engagement portion (122) if the seal member (10) is pressed along the axial direction (L) against the support member (120)
- by a force of at least the force threshold and/or
- by a pressure drop from the second side to the first side of the seal mount (40) of at least the inverse pressure drop threshold.

5. Sealing system (1) according to any one of the preceding claims, wherein the sealing system (1) is configured such that abutment of the seal member (10) on the engagement portion (23, 24) can only occur within a bottom portion of the channel (18) extending over a third of a depth of the channel (18) in the axial direction (L) at the maximum.

6. Sealing system (1; 100) according to any one of the preceding claims, wherein a length (H) of the engagement portion (23, 24; 122) along the axial direction (L) is larger than a depth of the channel (18) in the axial direction (L).

7. Sealing system (1; 100) according to any one of the preceding claims, wherein a width of the engagement portion (23, 24; 122) in the radial direction is increased at an end portion (24) of the support member (20; 120) at the second side.

8. Sealing system (1; 100) according to any one of the preceding claims, wherein the spreader (17) is made of metal.

9. Sealing system (1; 100) according to any one of the preceding claims, wherein the sealing lip portions (12, 14) and/or the connecting portion (11) are made of a fluoropolymer.

10. Sealing system (1; 100) according to any one of the preceding claims, wherein the support member (20; 120) is made of metal.

11. Sealing system (1; 100) according to any one of the preceding claims, wherein a Young's modulus of a material of the spreader (17) is at least 50 times of a Young's modulus of a material of the sealing lip portions (12, 14) and/or the connecting portion (11).

12. Sealing system (1; 100) according to any one of the preceding claims, wherein the seal member (10) has an at least substantial U-, V-, Y- or horseshoe-shaped cross-section along the circumferential cross-section.

13. Sealing system (1; 100) according to any one of the preceding claims, wherein the annular seal member (10) is a spring-energized U-cup seal.

14. Fluid valve (50) including a seal mount (40) and sealing system (1; 100) according to any one of the preceding claims mounted in the seal mount (40).

15. Sealing method, comprising the step of providing an annular seal member (10) and an annular support member (20; 120) mounted in an annular seal mount (40) extending along a circumferential direction about a central axis (M) defining an axial direction (L),
wherein the annular seal member (10) includes
- two sealing lip portions (12, 14) connected by a connecting portion (11), wherein the sealing lip portions extend away from the connecting portion (11) towards a first side in the axial direction (L), wherein the two sealing lip portions (12, 14) and the connecting portion (11) form an annular groove opening towards the first side, and
- a spring-elastic spreader (17) for forcing end sections of the sealing lip portions (12, 14) at the first side apart from each other, wherein the spreader (17) is arranged and secured within the groove and forms a channel (18) opening towards the first side; and
wherein the support member (20; 120) includes an engagement portion (23, 24; 122) that protrudes in the axial direction (L) towards the second side and is received in the channel (18);
**characterized by** pressing the seal member (10) along the axial direction (L) against the engagement portion (23, 24; 122), e.g. by a pressure drop from the second side to the first side of the seal mount (40), wherein the engagement portion (23, 24; 122) directly abuts and supports the spreader (17) at a first radial position (R1; R1') and a second radial position (R2; R2') spaced apart in a radial direction, thereby inducing spreading force for forcing the end sections of the sealing lip portions (12, 14) apart from each other via the spreader (17).
